# EUROPEAN PATENT SPECIFICATION

(11) **EP 2 902 310 B1**
(45) Date of publication and mention of the grant of the patent: **19.04.2017**
(21) Application number: 12885537.6
(22) Date of filing: 28.12.2012
(51) Int. Cl.: B63B 27/24, B63B 25/08, B01D 5/00, B63B 25/12, B65D 90/28, B63B 17/00

(54) **OIL LOADING DEVICE AND OIL CARRIER PROVIDED WITH SAME**
ÖLLADEVORRICHTUNG UND ÖLTRÄGER DAMIT
DISPOSITIF D'APPROVISIONNEMENT EN HUILE ET BARRIÈRE D'HUILE DOTÉE DE CELUI-CI

(30) Priority: 27.09.2012 KR 20120108253
(43) Date of publication of application: 05.08.2015
(73) Proprietor: Samsung Heavy Industries Co., Ltd., Seoul 137-955 (KR)
(72) Inventor: CHOI, Sung Yun, Jinju-si Gyeongsangnam-do 660-780 (KR); KIM, Seung Hyuk, Geoje-si Gyeongsangnam-do 656-914 (KR); SONG, Yong Seok, Busan 611-760 (KR); CHOI, Jae Woong, Uiwang-si, Gyeonggi-do (KR)
(74) Representative: Heine, Christian Klaus
(86) International application number: PCT/KR2012/011684
(87) International publication number: WO 2014/051216

(56) References cited:
- EP-A1- 1 463 683
- EP-A2- 2 305 552
- WO-A1-2011/112095
- WO-A1-2011/112095
- KR-A- 20110 041 450
- KR-A- 20120 098 134
- US-A- 4 053 141
- US-A1- 2005 039 800
- US-B2- 7 228 871

## Description

### BACKGROUND

### 1. Field of the Invention

The present invention relates to an oil loading apparatus and an oil carrier including the same, and more particularly, to an oil loading apparatus capable of preventing occurrence of volatile organic compounds (VOC) when loading oil in a storage tank, and an oil carrier including the same.

### 2. Description of the Related Art

In land or maritime crude oil production facilities, crude oil storage facilities, crude oil carriers, etc., oil such as crude oil, petroleum, liquefied gas, and other mineral liquid cargo is stored in a storage tank, and due to the temperature or pressure change within the storage tank, volatile organic compounds (VOC) which are gaseous elements are filled on the upper part of the storage tank.

Such volatile organic compounds may be generated in the process of loading oil in the storage tank. When loading oil from a supply pipe to the storage tank, an excessive pressure drop may occur in the process where oil drops, and due to such a pressure drop, oil is evaporated, and thereby volatile organic compounds are generated.

Volatile organic compounds contain various organic compounds such as methane, propane, butane, and ethane, and they are harmful to human bodies and when discharged to the air, they become causes of smog, thereby causing air pollution. Specifically, volatile organic compounds are highly mobile in the air, cause smell, are potentially toxic and carcinogenic, and form ozone by photochemically reacting with nitric oxide and other compounds, and thus environmental pollution by such volatile organic compounds is drawing special attention. Further, when such volatile organic compounds are discharged to the air, such amount of oil is lost. Hence, it is needed to reduce the generation of the volatile organic compounds when loading oil.

As a background technology of the present invention, the method and equipment in the loading column as disclosed in a patent literature has a transverse cross-section of a loading column wider than that of a supply pipe and has a spiral downward flow pattern as crude oil is moved.

According to the conventional technology, a loading column having a transverse cross-section relatively wider than that of the supply pipe is needed, and thus a lot of space for installation is required in order to install the loading column. Loading apparatuses are known from WO 2011112095, EP 1463683, EP 2305552 or KR 20120098134.

### SUMMARY

The present invention provides an oil loading apparatus capable of preventing occurrence of volatile organic compounds (VOC) when loading oil in a storage tank, and an oil carrier including the same.

In accordance with an aspect of the present invention, an oil loading apparatus which is connected to a supply pipe and loads oil in a storage tank includes: a loading pipe which is connected to the supply pipe and is disposed in a vertical direction in the inside of the storage tank; a pressure drop module which includes a pressure drop pipe, one end of which is connected to a lower end of the loading pipe, and a multi-hole orifice which is installed in a transverse direction in an inside of the pressure drop pipe and induces a pressure drop of the oil which is discharged from the loading pipe; and a first static mixer which is connected to the other end of the pressure drop pipe and mixes the oil which is discharged from the pressure drop pipe.

The oil loading apparatus may further include: a T-shaped branch pipe which is interposed between the pressure drop pipe and the first static mixer and includes a vertical pipe, one end of which is communication with the other end of the pressure drop pipe and the other end of which is closed, and a horizontal pipe, which is in communication with the vertical pipe and which is disposed separately from the other end of the vertical pipe by a predetermined distance, while extending in the transverse direction from one sidewall of the vertical pipe and being connected to the first static mixer.

The oil loading apparatus may further include a buffer tank into which the oil, which has passed through the first static mixer, flows.

The buffer tank may include: a discharge pipe which connects the first static mixer with the buffer tank and is disposed on the lower end of the buffer tank; and an oil supply pipe which supplies the oil from the buffer tank to the storage tank, wherein an outlet of the discharge pipe does not face an inlet of the oil supply pipe.

The oil loading apparatus may further include: a pressure line installed in an external side of the buffer tank, one end of which is connected to one side of the buffer tank, and the other end of which is connected to the other end of the buffer tank; a pump which is disposed in the pressure line and moves the oil in the buffer tank along the pressure line; an educator which is disposed in the pressure line; and a suction line which connects the educator with an upper end of at least one of the buffer tank and the storage tank.

A second static mixer may be interposed between the educator and the other end of the pressure line.

The other end of the input line is connected to the first static mixer. The first static mixer may include: a tubular body which is connected to the other end of the pressure drop pipe; and a mixing screw which is disposed in a longitudinal direction within the tubular body.

The orifice may open and close an inside of the pressure drop pipe according to rotation.

The loading pipe and the pressure drop module may form one loading module, there may be a plurality of loading modules, and the pressure drop pipe of each of the loading modules may be connected to one first static mixer.

There may be a plurality of storage tanks, and the storage tank include: an oil supply pipe which connects the plurality of storage tanks in order to distribute the oil to the plurality of storage tanks; and a bypass loading line which is branched in the loading pipe and is connected to the oil supply pipe.

The oil loading apparatus may further include a connection pipe which is interposed between the loading pipe and the pressure drop module and connects the loading pipe with the pressure drop module.

In accordance with another aspect of the present invention, an oil carrier includes: a ship body; a storage tank which is prepared in an inside of the ship body and where oil, which flows in from a supply pipe, is loaded; and an oil loading apparatus according to one of claims 1 to 12.

### BRIEF DESCRIPTION OF THE DRAWINGS

The above and other features and advantages of the present invention will become more apparent by describing in detail preferred embodiments thereof with reference to the attached drawings in which:
FIG. 1 is a perspective view of an oil loading apparatus according to a first embodiment of the present invention.
FIG. 2 is a sectional view of a part of an oil loading apparatus according to a first embodiment of the present invention.
FIG. 3 is s sectional view taken along A-A line of FIG. 2.
FIG. 4 is a longitudinal sectional view of a pressure drop pipe of an oil loading apparatus according to a first embodiment of the present invention.
FIG. 5 is a perspective view of an oil loading apparatus according to a second embodiment of the present invention.
FIG. 6 is a perspective view of a part of an oil loading apparatus according to a third embodiment of the present invention.
FIG. 7 is a perspective view of an oil loading apparatus according to an embodiment of the present invention.

### DETAILED DESCRIPTION OF THE EMBODIMENTS

The present invention can be modified in various manners and may have various embodiments, and in this specification, some embodiments will be described with reference to drawings. However, the present invention is not limited to the embodiments described here and may include all conversions within the scope of the claims. When it appears that the specification description on already known related technologies, the detailed description will be omitted here.

Hereinafter, embodiments of an oil loading apparatus according to the present invention will be described in detail with reference to the attached drawings. Here, the same reference numerals refer to the same elements, and thus redundant description for the same elements is omitted.

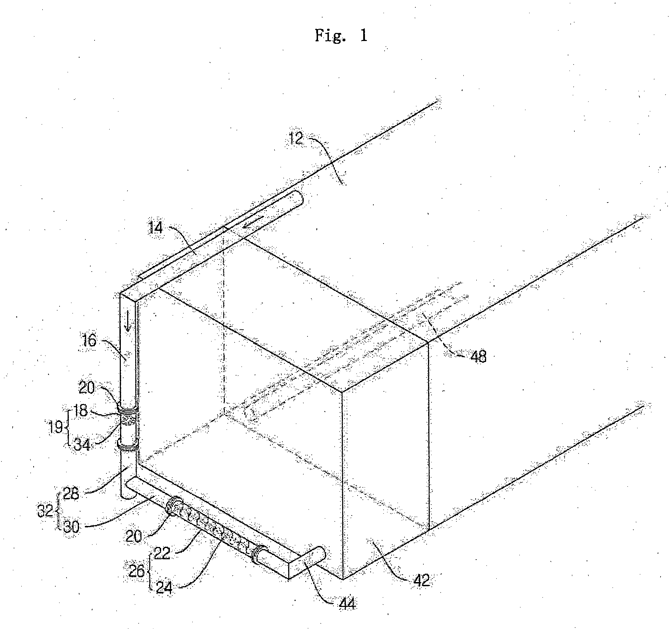

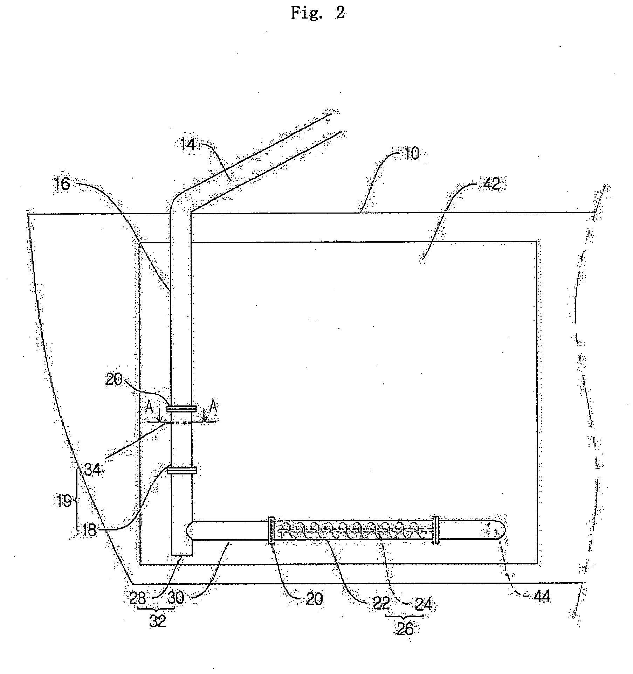

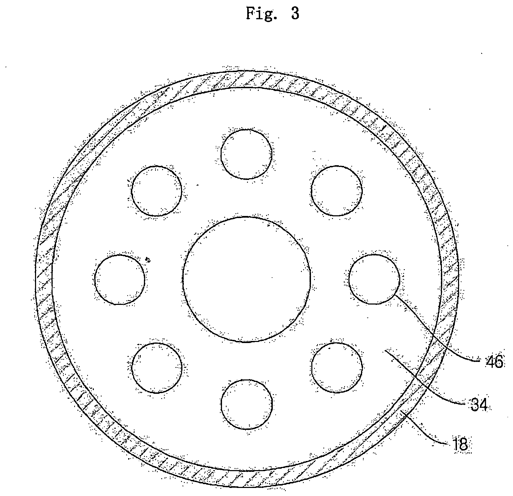

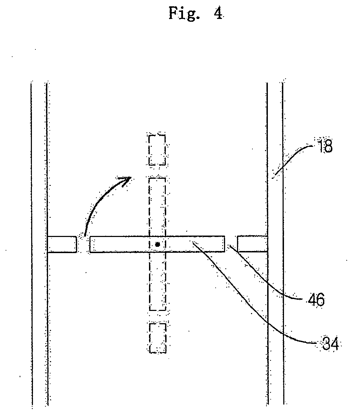

FIG. 1 is a perspective view of an oil loading apparatus according to a first embodiment of the present invention, FIG. 2 is a sectional view of a part of an oil loading apparatus according to a first embodiment of the present invention, FIG. 3 is s sectional view taken along A-A line of FIG. 2, and FIG. 4 is a longitudinal sectional view of a pressure drop pipe of an oil loading apparatus according to a first embodiment of the present invention.

FIGS. 1 to 4 illustrate a ship body 10, a storage tank 12, a supply pipe 14, a loading pipe 16, a pressure drop pipe 18, a pressure drop module 19, a flange 20, a tubular body 22, a mixing screw 24, a first static mixer 26, a vertical pipe 28, a horizontal pipe 30, a T-shaped branch pipe 32, an orifice 34, a buffer tank 42, a discharge pipe, a hole 46, and an oil supply pipe 48.

The oil loading apparatus according to the present embodiment is connected to a supply pipe 14 and loads oil in a storage tank 12. The oil loading apparatus includes: a loading pipe 16 which is connected to the supply pipe 14 and is disposed in a vertical direction in the inside of the storage tank 12; a pressure drop pipe 18, one end of which is connected to the lower end of the loading pipe 16; a multi-hole orifice 34 which is installed in a transverse direction in an inside of the pressure drop pipe 18 and induces a pressure drop of the oil which is discharged from the loading pipe 16; and a first static mixer 26 which is connected to the other end of the pressure drop pipe 18 and mixes the oil which is discharged from the pressure drop pipe 18.

Here, oil includes crude oil, petroleum, liquefied gas, and other mineral liquid cargo from which volatile organic compounds may be generated due to a temperature or pressure change.

The oil loading apparatus may be installed at the inner or external side of the storage tank 12 which is prepared in the ship body 10 of the oil carrier and prevent generation of volatile organic compounds when loading oil in the storage tank 12. In the present embodiment, the case where the oil loading apparatus is installed in the external side of the storage tank 12 will be described.

The storage tank may be included in land or maritime crude oil production facilities, crude oil storage facilities, crude oil carriers, etc., and in the present embodiment, the storage tank 12 prepared in the ship body 10 of the oil carrier will be described.

The supply pipe 14 may be disposed on the upper part of the storage tank 12 in the horizontal direction, and through which oil flows into the storage tank 12 from the outside. When the storage tank 12 is prepared in the ship body 10 of the oil carrier, the supply pipe 14 is connected to the oil storage tank 12 of the oil producing area so that the oil may be supplied to the storage tank 12 of the oil carrier.

The loading pipe 18 is connected to the supply pipe 14 and is vertically disposed in the inside or outside of the storage tank 12. The upper end of the loading pipe 18 may be connected to the supply pipe 14 so as to be supplied oil. In the present embodiment, the loading pipe 16 is prepared in the outside of the storage tank 12.

The pressure drop module 19 is connected to the lower end of the loading pipe 16 and induces a pressure drop of oil which is discharged from the loading pipe 16. The pressure drop module 19 may include the following detailed configuration in order to induce a pressure drop by increasing the resisting force against the oil flow.

Here, the pressure drop may mean a pressure difference between one point of a pipe where a fluid like oil flows and one point of another flow.

The pressure drop module 19 includes a pressure drop pipe 18, one end of which is connected to the lower end of the loading pipe 16, and a multi-hole orifice 34 which is installed in the transverse direction in the inside of the pressure drop pipe 18.

The pressure drop pipe 18 may have substantially the same inside diameter as that of the loading pipe 16, and one end of the pressure drop pipe 18 may be connected to the lower end of the loading pipe 16 by the flange 20. The multi-hole orifice 34 is coupled in the transverse direction in the inside of the pressure drop pipe 18 so as to induce the pressure drop of the oil which flows in from the loading pipe 16. For example, the generation of the volatile organic compounds in the loading pipe 16 may be reduced by maintaining the pressure inside the loading pipe 16 higher than the saturated pressure of the oil by adjusting the pressure drop in the pressure drop module 19.

Referring to FIGS. 2 and 3, the orifice 34 has a plate shape having a plurality of holes 46, and the number, size, and shape of the holes 46 may be determined according to the amount of pressure drop. The flow may be accelerated by gravity when the oil flows downward along the loading pipe 16, but the pressure drop is induced as the speed partly drops by the orifice 34.

The orifice 34 may be disposed in the horizontal direction with respect to the longitudinal direction of the pressure drop pipe 18.

The orifice 34 may be configured to be fixed on the inner wall of the pressure drop pipe 18 or to open and close the inside of the pressure drop pipe 18 according to rotation.

Design parameters such as the number of orifices 34, the number, size, and shape of holes 46 of the orifice 34 may be determined in consideration of the influence according to the oil level change in the storage tank and the amount of the flow in the rated operation condition.

In particular, if the type or size of the oil carrier is determined, the time and amount, which is needed in loading oil, may be determined, and accordingly, the design parameters of the orifice 34 may be determined within the scope of expecting the reduction of the volatile organic compounds.

That is, when the time and amount, which is needed in loading oil, is changed according to the change of the oil carrier, the existing design parameters may be changed so that the existing orifice may be substituted by the orifice 34 having the changed design parameters, thereby easily adjusting the reduction performance of the volatile organic compounds. Further, when the reid vapor pressure (RVP) is changed, the design parameters of the orifice 34 may be changed so as to reduce the generation of the volatile organic compounds.

Further, the orifice 34 may be configured to open or close the inside of the pressure drop pipe 18 according to the rotation. Referring to FIG. 4, in the state where the orifice 34 of a round plate shape is arranged in a horizontal direction in the inside of the pressure drop pipe 18, the inside of the pressure drop pipe 18 may be opened or closed as the round plate is rotated on the central line of the round plate. That is, if the orifice 34 of the round plate shape is rotated in a horizontal direction toward the longitudinal direction of the pressure drop pipe 18, the inside of the pressure drop pipe 18 is closed, and if the orifice 34 of the round plate shape is rotated in the same direction as the longitudinal direction of the pressure drop pipe 18, the inside of the pressure drop pipe 18 is opened. Further, even in the state the pressure drop pipe 18 is closed by the orifice 34, oil is moved through the hole 46 of the orifice 34.

If oil flows into the storage tank 12 and is filled up to a certain height, the pressure inside the loading pipe 16 may increase, and if the pressure of the loading pipe 16 increases, the total head of the pump in the land side for supplying oil to the storage tank 12 increase, and thereby the pumping efficiency may be lowered. Hence, the pressure drop reduction is performed by opening the inside of the pressure drop pipe 18 by rotating the orifice.

The first static mixer 26 is connected to the other end of the pressure drop pipe 18 and mixes the oil discharged from the pressure drop pipe 18.

Volatile organic compounds (VOC) may be generated in the process of passing through the loading pipe 16 and the pressure drop module 19, and such gaseous elements are contained in the oil in the form of bubbles. As the oil having such gaseous elements in the bubble form passes through the first static mixer 26, the size of the bubbles is reduced, and the size-reduced bubbles are mixed in the oil, thereby reducing the generation of the gaseous elements is reduced. Further, the generation gaseous elements in the oil is reduced while a relatively high pressure is maintained in the front end of the first static mixer 26 due to the first static mixer 26.

The first static mixer 26 according to the present embodiment includes a tubular body 22 which is connected to the other end of the pressure drop pipe 18, and a mixing screw 24 which is disposed in the longitudinal direction in the inside of the tubular body 22. The tubular body 22 is connected to the lower end of the pressure drop pipe 18 by the flange 20, and the mixing screw 24 is disposed in the inside of the tubular body 22 according to the longitudinal direction. As the oil, which has passed through the pressure drop pipe 18, passes through the tubular body 22 and is mixed by the mixing screw 24, the size of the bubbles of the gaseous elements is reduced, and the size-reduced bubbles are easily mixed with the liquid oil.

In the present embodiment, the static mixer of a line shape, where a mixing screw 24 is disposed in the inside, is presented as the first static mixer 26, but anything having a structure capable of reducing the bubble size of the gaseous elements contained in the oil may be the first static mixer 26.

Further, a T-shaped branch pipe 32 may be interposed between the pressure drop pipe 18 and the first static mixer 26. The T-shaped branch pipe 32 according to the present embodiment includes a vertical pipe 28, one end of which is in communication with the other end of the pressure drop pipe 18, and the other end of which is closed, and a horizontal pipe 30, which is in communication with the vertical pipe 28 and which is disposed separately from the other end of the vertical pipe 28 by a predetermined distance, while extending in the transverse direction from one sidewall of the vertical pipe 28 and being connected to the first static mixer 26.

The flowing direction of the oil, which passes through the pressure drop pipe 18, may be changed from the vertical flow to the horizontal flow through the T-shaped branch pipe 32. At this time, the horizontal pipe 30 is disposed away from the other end of the vertical pipe 28 by a predetermined distance to be connected to the vertical pipe 28, and thus oil is filled up to the height of the lower end of the horizontal pipe 30 at the lower end inside the vertical pipe 28. The oil, which fills the inner lower end of the vertical pipe 28, absorbs the impact of the oil which vertically drops after passing through the pressure drop pipe 18. That is, the speed of the oil, which passes through the pressure drop module 19, increases due to the orifice 34, and the accelerated oil may directly impact the inner wall of the pipe. As such, the wear and vibration noise of the pipe, which may be generated due to the oil's direct impact on the inner wall of the pipe, may be reduced, and the vertically dropping oil and the oil's gaseous elements may be mixed so as to absorb the gaseous elements.

The distance between the horizontal pipe 30 and the vertical pipe 28 in the direction from the other end to one of the vertical pipe 28 determines the amount of oil which is filled in the lower end of the vertical pipe 28, and thus may vary according to the amount of impact of the falling oil.

The loading pipe 16, the pressure drop pipe 18, the T-shaped branch pipe 32, and the tubular body 22 which forms the first static mixer 26 may be selectively, integrally formed.

The oil, which has passed the loading pipe 16, the pressure drop module 19, and the first static mixer consecutively, may flow into the storage tank 12 or the buffer tank 42 through the discharge pipe 44.

Further, the buffer tank 42 for temporarily storing the first static mixer 26 may be coupled to the end of the first static mixer 26. The capacity of the buffer tank 42 is relatively smaller than that of the storage tank 12, but the buffer tank 42 may be prepared to have a height similar to that of the storage tank 12. As such, the amount of inflow of oil to the buffer tank 42 per hour is greater than the amount of inflow or oil to the storage tank 12.

The gaseous elements may still be contained in the oil which has passed through the first static mixer 26, and if the oil flows into the buffer tank 42, the liquid oil is positioned at the lower end of the buffer tank 42, and the gaseous elements are positioned at the upper end of the buffer tank 42. An oil supply pipe 48 for distributing oil to each storage tank 12 is prepared in the lower end of the buffer tank 42 so that the liquid oil at the lower end of the buffer tank 42 is distributed to each storage tank 12 through the oil supply pipe 48.

The capacity of the buffer tank 42 is smaller than that of the storage tank, and thus an appropriate height may be secured in the buffer tank 42 within a short period of time. As such, the condensation between the gaseous elements and the liquid oil in the buffer tank 42, the pressure drop pipe 18 at the front of the buffer tank 42, the T-shaped branch pipe 32, and the tubular body 22 of the first static mixer 26 may be effectively performed.

The discharge pipe 33 connects the first static mixer 26 with the buffer tank 42, and is located at the lower end of the buffer tank 42. The outlet of the discharge pipe 42, through which oil is discharged to the buffer tank 42, may be set not to face the inlet of the oil supply pipe 48, through which the oil flows in. The oil, which has passed through the first static mixer 26, flows into the buffer tank 42 at a constant speed, and if the oil with such a speed directly flows into the inlet of the oil supply pipe 48, the gaseous elements may also flow into the oil supply pipe 48. Hence, the pipe may be design such that the outlet of the discharge pipe 44 does not face the inlet of the oil supply pipe 48 in order to prevent the inflow of the gaseous elements.

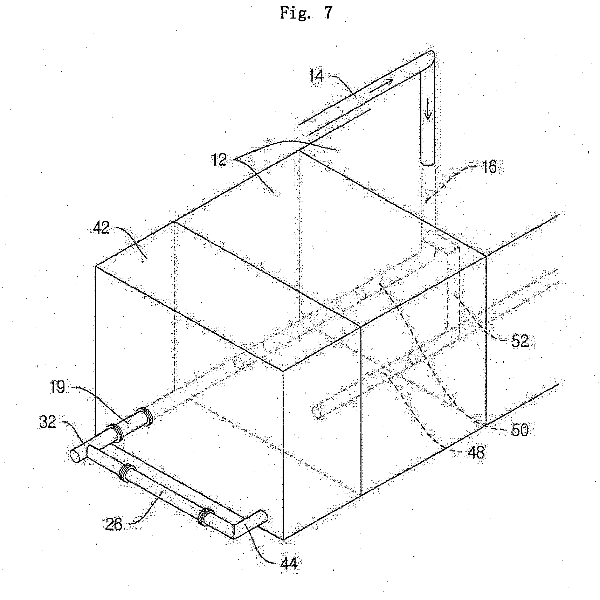

Further, when a plurality of storage tanks 12 are disposed in the ship body 10 and the oil supply pipe 48 for connecting each storage tank 12 is installed, a bypass loading line (52 of FIG. 7), which is branched from the loading pipe 16 and is connected to the oil supply pipe 48, may be arranged.

When the orifice 34 included in the pressure drop module 19 is not opened and thereby the pressure of the loading pipe 16 excessively increases, the bypass loading line 52 may prevent the excessive hydrostatic head increase of the land pump by allowing the whole or part of the oil to directly flow into the oil supply pipe 48 through bypassing the pressure drop module 19, the first static mixer 26, etc.

Further, when the hydrostatic head of the land pump excessively increased due to the increase of the height of the oil in the storage tank 12 according to the installation of the pressure drop module 19, the first static mixer 26, etc., the excessive hydrostatic increase of the land pump may be prevented by allowing the whole or part of the oil to be bypassed through the bypass loading line 52 so as to flow into the oil supply pipe 48.

Hereinafter, the operation method of the oil loading apparatus according to the present embodiment will be described.

Referring to FIG. 1, the oil, which is transferred through the supply pipe 14 and the loading pipe 16, passes through the multi-hole orifice 34. At this time, the pressure drop may occur while passing through the multi-hole orifice 34, and the flowing direction is changed through the T-shaped branch pipe 32, thereby reaching the entrance of the first static mixer 26. As the oil, which has passed through the T-shaped branch pipe 32, passes through the first static mixer 26, the bubble size of the gaseous elements is reduced, and the size-reduced bubbles are mixed with the liquid oil and are melted in the oil. The oil, in which the bubbles of gaseous elements are melted by the first static mixer 26, flows into the buffer tank 42 and is filled up to an appropriate height.

The gaseous elements may still be contained in the oil which has passed through the first static mixer 26, and if the oil flows into the buffer tank 42, the liquid oil is positioned at the lower end of the buffer tank 42, and the gaseous elements are positioned at the upper end of the buffer tank 42. The oil, which flows into the buffer tank 42, is distributed to each storage tank 13 through the oil supply pipe 48 which is prepared in the lower end.

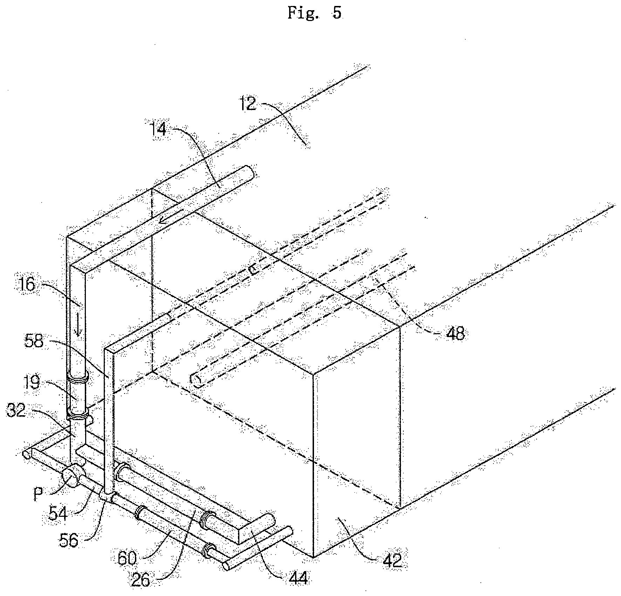

FIG. 5 is a perspective view of an oil loading apparatus according to a second embodiment of the present invention. FIG. 5 illustrates a storage tank 12, a supply pipe 14, a loading pipe 16, a pressure drop module 19, a first static mixer 26, a T-shaped branch pipe 32, a buffer tank 42, a discharge pipe 44, an oil supply pipe 48, a pressure line 54, an educator 56, a suction line 58, a second static mixer 60, and a pump P.

The oil loading apparatus according to the present embodiment includes a configuration for collecting gaseous elements within the buffer tank 42 and the storage tank 12 in addition to the oil loading apparatus according to the first embodiment.

As described above, the oil, which has passed through the first static mixer 26, may still contain gaseous elements, and when oil flows into the buffer tank 42 or the storage tank 12, the liquid oil is positioned in the lower end of the buffer tank 42 or the storage tank 12, and the gaseous elements are positioned at the upper end of the buffer tank 42 or the storage tank 12.

In order to collect the gaseous elements positioned at the lower end of the buffer tank 42 or the storage tank 12, the oil loading apparatus according to the present embodiment may further include: a pressure line 54 installed in an external side of the buffer tank, one end of which is connected to one side of the buffer tank 42, and the other end of which is connected to the other end of the buffer tank 42; a pump P which is disposed in the pressure line 54 and moves the oil in the buffer tank 42 along the pressure line 54; an educator 56 which is disposed in the pressure line 54; and a suction line 58 which connects the educator 56 with an upper end of at least one of the buffer tank 54 and the storage tank 12.

Both ends of the pressure line 54 are respectively connected to one end and the other end of the buffer tank 42, and the pump P and the educator 56 are interposed in the middle of the pressure line 54. Both ends of the section line 58 may be respectively connected to the upper end of the buffer tank 42 and the educator 56.

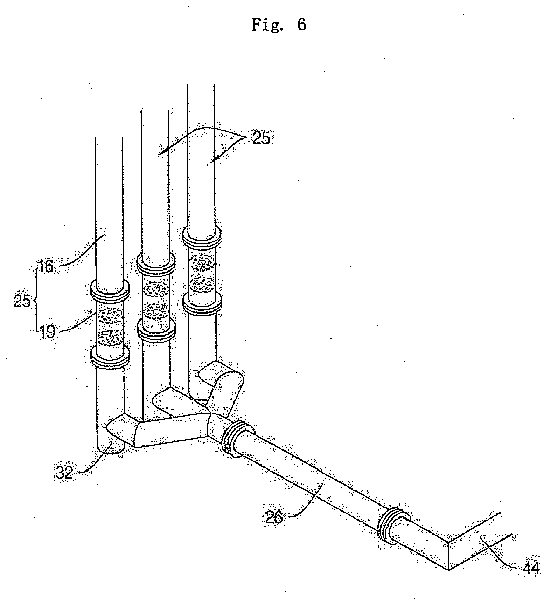

As illustrated in FIG. 6, the suction line 58 may be configured so that the gaseous elements in the upper end of the buffer tank 42 and the storage tank 12 may be absorbed by extending the suction line 58 to the storage tank 12.

As the oil in the buffer tank 42 is quickly moved along the pressure line 54 by the pump P, the negative pressure is generated within the educator 56, and thereby the gaseous elements in the upper end of the buffer tank 42 and the storage tank 12 flow into the educator 56 along the suction line 58 through the suction line 58. As the oil, which is move along the pressure line 54 in the educator 56, is mixed with the gaseous elements which flow into the educator 56, the gaseous elements within the buffer tank 42 or the storage tank 12 may be collected.

Further, a second static mixer 60 may be interposed between the educator 56 and the other end of the pressure line 54 in order to efficiently mix the oil, which passes through the educator 56, with the gaseous elements. The bubble size of the gaseous elements, which pass through the educator 56, is reduced while passing through the second static mixer 60, and may be easily mixed with the liquid oil.

In the present embodiment, a form which uses a separate second static mixer 60 is used is presented, but it is possible to connect the pressure line 54 to the above-described first static mixer 26 so that the liquid which is the mixture of the oil and the gaseous elements by the educator 56 is set to flow into the buffer tank 42 again by using the first static mixer 26.

A lot of gaseous elements may be generated at the initial oil loading, and because the capacity of the buffer tank 42 is smaller than that of the storage tank 12, the internal pressure may be generated as the gaseous elements rapidly increase. In this case, the discharge of the gaseous elements into the air may be prevented by collecting the gaseous elements in the buffer tank 42 and transferring the gaseous elements to the storage tank 12 having a large capacity.

The configuration for collecting the gaseous elements in the present embodiment may be easily utilized even when moving the oil as well as when loading the oil. The gaseous elements may be generated in the buffer tank 42 or the storage tank 12 due to the movement of the ship and the amount of heat which is flown in from the outside when moving the oil. When moving the oil, the oil is loaded even in the buffer tank 42, and thus the gaseous elements may be collected in the buffer tank 42 or the storage tank 12 through the suction line 58 by moving the oil in the buffer tank 42 along the pressure line 54 by using the pump P.

FIG. 6 is a perspective view of a part of an oil loading apparatus according to a third embodiment of the present invention. FIG. 6 illustrates a loading pipe 16, a pressure drop module 19, a loading module 25, a first static mixer 26, a T-shaped branch pipe 32, and a discharge pipe 44.

A plurality of loading pipes 16 may be prepared in a ship body in order to efficiently load oil in a storage tank. In this case, as illustrated in FIG. 6, the pressure drop module 19, which is connected to each loading pipe 16 and the lower end, may be formed as one loading module 25, and the oil discharged from each loading module 25 may be configured to pass through one first static mixer 26.

The present embodiment presents a form in which each T-shaped branch pipe 32 is connected to the lower end of each loading module 25, and the horizontal pipe 30 of each T-shaped branch pipe 32 is connected to the entrance of one first static mixer 26. It is possible to connect each first static mixer 26 to each loading module 25 depending on the design.

FIG. 7 is a perspective view of an oil loading apparatus according to an embodiment of the present invention. FIG. 7 illustrates a storage tank 12, a supply pipe 14, a loading pipe 16, a pressure drop module 19, a first static mixer 26, a T-shaped branch pipe 32, a buffer tank 42, a discharge pipe 44, an oil supply pipe 48, a connection pipe 50, and a bypass loading line 52.

When it is difficult to install the oil loading apparatus according to the present embodiment in the inside of the storage tank 12 as the loading pipe 16 is positioned in the inside of the storage tank 12, or some components of the oil loading apparatus need to be placed away from the loading pipe 16 according to the design, a connection pipe 50 may be disposed between the pressure drop module 19 and the loading pipe 16.

Referring to FIG. 7, the loading pipe 16 is disposed in the storage tank 12 in the vertical direction, and one end of the connection pipe 50, which is disposed in the transverse direction, is connected to the lower end of the loading pipe 16. The other end of the connection pipe 50 is extended to the external side of the storage tank 12 after passing through the storage tank 12. The pressure drop pipe of the pressure drop module 19 is connected to the other end of the connection pipe 50, and the T-shaped branch pipe 32 is connected to the pressure drop pipe. The first static mixer 26 is connected to the horizontal pipe of the T-shaped branch pipe 32, and the first static mixer 26 and the buffer tank 42 are connected by the discharge pipe 44.

If the oil flows in from the supply pipe 14, the oil reaches the pressure drop module 19 via the loading pipe 16 and the connection pipe 50. The pressure of the inside of the loading pipe 16 and the connection pipe 50 may be maintained higher than the saturated pressure of the oil by the pressure drop module 19, and the generation of volatile organic compounds in the loading pipe 16 and the connection pipe 50 may be reduced.

The moving direction of the oil, which passes through the pressure drop module 19, is changed by the T-shaped branch pipe 32, and the oil passes through the first static mixer 26. The oil, which passes through the first static mixer 26, flows into the buffer tank 42 via the discharge pipe 44.

If the oil of a certain amount flows into the buffer tank 42, the oil is distributed to each storage tank 12 through the oil supply pipe 48.

Further, in order to the excessive hydrostatic head increase of the land pump, a bypass loading line 52, which is branched from the loading pipe 16 and is directly connected to the oil supply pipe 48, may be prepared.

An oil loading apparatus and an oil carrier including the same according to an embodiment of the present invention may present generation of volatile organic compounds when loading oil in a storage tank.

The embodiments of the present invention have been described with reference to the attached drawings, but it will be understood by one of ordinary skill in the art that the present invention can be performed in other specific forms without changing the technical ideas and essential features of the present invention. For example, one of ordinary skill in the art can execute the present invention in a form which is not clearly disclosed in the embodiments of the present application by changing the material or size of each component or combining or substituting embodiments, but this is still within the scope of the present invention. Hence, all embodiments described above are examples and should not be understood as limitative, and it should be understood that such modified embodiments are included in the technical ideas disclosed in the claims of the present invention, which is defined by the appended claims.

## Claims

1. An oil loading apparatus which is connected to a supply pipe and loads oil in a storage tank, the oil loading apparatus comprising:
a loading pipe (16) which is connected to the supply pipe and is disposed in a vertical direction in the inside of the storage tank;
a pressure drop module (19) which includes a pressure drop pipe (18), one end of which is connected to a lower end of the loading pipe, and a multi-hole orifice (34) which is installed in a transverse direction in an inside of the pressure drop pipe (18) and induces a pressure drop of the oil which is discharged from the loading pipe; and
a first static mixer (26) which is connected to the other end of the pressure drop pipe (18) and mixes the oil which is discharged from the pressure drop pipe.

2. The oil loading apparatus of claim 1, further comprising:
a T-shaped branch pipe (32) which is interposed between the pressure drop pipe and the first static mixer and includes a vertical pipe, one end of which is communication with the other end of the pressure drop pipe and the other end of which is closed, and a horizontal pipe, which is in communication with the vertical pipe and which is disposed separately from the other end of the vertical pipe by a predetermined distance, while extending in the transverse direction from one sidewall of the vertical pipe and being connected to the first static mixer.

3. The oil loading apparatus of claim 1, further comprising:
a buffer tank (42) into which the oil, which has passed through the first static mixer, flows.

4. The oil loading apparatus of claim 3, wherein the buffer tank (42) comprises:
a discharge pipe (44) which connects the first static mixer with the buffer tank and is disposed on the lower end of the buffer tank; and
an oil supply pipe (48) which supplies the oil from the buffer tank to the storage tank,
wherein an outlet of the discharge pipe does not face an inlet of the oil supply pipe.

5. The oil loading apparatus of claim 3, further comprising:
a pressure line (54) installed in an external side of the buffer tank, one end of which is connected to one side of the buffer tank, and the other end of which is connected to the other end of the buffer tank;
a pump which is disposed in the pressure line and moves the oil in the buffer tank along the pressure line;
an educator (56) which is disposed in the pressure line; and
a suction line (58) which connects the educator with an upper end of at least one of the buffer tank and the storage tank.

6. The oil loading apparatus of claim 5, wherein a second static mixer is interposed between the educator (56) and the other end of the pressure line.

7. The oil loading apparatus of claim 5, wherein the other end of the input line is connected to the first static mixer (26).

8. The oil loading apparatus of claim 1, wherein the first static mixer comprises:
a tubular body which is connected to the other end of the pressure drop pipe (18), and
a mixing screw (24) which is disposed in a longitudinal direction within the tubular body.

9. The oil loading apparatus of claim 1, wherein the orifice (34) opens and closes an inside of the pressure drop pipe according to rotation.

10. The oil loading apparatus of claim 1, wherein the loading pipe (16) and the pressure drop module (19) form one loading module, there are a plurality of loading modules, and the pressure drop pipe of each of the loading modules is connected to one first static mixer.

11. The oil loading apparatus of claim 1, wherein there are a plurality of storage tanks, and the storage tank comprises:
an oil supply pipe which connects the plurality of storage tanks in order to distribute the oil to the plurality of storage tanks; and
a bypass loading line (52) which is branched in the loading pipe and is connected to the oil supply pipe.

12. The oil loading apparatus of claim 1, further comprising:
a connection pipe (50) which is interposed between the loading pipe and the pressure drop module and connects the loading pipe with the pressure drop module.

13. An oil carrier comprising:
a ship body;
a storage tank which is prepared in an inside of the ship body and where oil, which flows in from a supply pipe, is loaded; and
an oil loading apparatus according to one of claims 1 to 12.

## Patentansprüche

1. Ölladevorrichtung, die mit einem Zuführrohr verbunden ist und Öl in einen Speichertank lädt, wobei die Ölladevorrichtung Folgendes umfasst:
ein Laderohr (16), das mit dem Zuführrohr verbunden ist und in einer vertikalen Richtung im Inneren des Speichertanks angeordnet ist;
ein Druckabfallmodul (19), das ein Druckabfallrohr (18), von dem ein Ende mit einem unteren Ende des Laderohrs verbunden ist, und eine Mehrkanal-Öffnung (34) aufweist, die in einer Querrichtung im Inneren des Druckabfallrohrs (18) angebracht ist und einen Druckabfall des Öls hervorruft, das aus dem Laderohr abgegeben wird; und
einen ersten statischen Mischer (26), der mit dem anderen Ende des Druckabfallrohrs (18) verbunden ist und das Öl mischt, das aus dem Druckabfallrohr abgegeben wird.

2. Ölladevorrichtung nach Anspruch 1, ferner umfassend:
ein T-förmiges Zweigrohr (32), das zwischen dem Druckabfallrohr und dem ersten statischen Mischer angeordnet ist und ein vertikales Rohr, von dem ein Ende in Verbindung mit dem anderen Ende des Druckabfallrohrs steht und das andere Ende geschlossen ist, und ein horizontales Rohr aufweist, das in Verbindung mit dem vertikalen Rohr steht und das von dem anderen Ende des vertikalen Rohrs durch einen vorgegebenen Abstand getrennt angeordnet ist, während es sich in Querrichtung von einer Seitenwand des vertikalen Rohrs erstreckt und mit dem ersten statischen Mischer verbunden ist.

3. Ölladevorrichtung nach Anspruch 1, ferner umfassend:
einen Puffertank (42), in den das Öl fließt, das durch den ersten statischen Mischer geströmt ist.

4. Ölladevorrichtung nach Anspruch 3, wobei der Puffertank (42) Folgendes umfasst:
ein Abgaberohr (44), das den ersten statischen Mischer mit dem Puffertank verbindet und am unteren Ende des Puffertanks angeordnet ist; und
ein Ölzuführrohr (48), welches das Öl aus dem Puffertank dem Speichertank zuführt,
wobei ein Auslass des Abgaberohrs einem Einlass des Ölzuführrohrs nicht zugewandt ist.

5. Ölladevorrichtung nach Anspruch 3, ferner umfassend:
eine Druckleitung (54), die in einer Außenseite des Puffertanks angebracht ist, von der ein Ende mit einer Seite des Puffertanks verbunden ist und von der das andere Ende mit dem anderen Ende des Puffertanks verbunden ist;
eine Pumpe, die in der Druckleitung angeordnet ist und die das Öl im Puffertank entlang der Druckleitung bewegt;
einen Ejektor (56), der in der Druckleitung angeordnet ist; und
eine Ansaugleitung (58), die den Ejektor mit einem oberen Ende von zumindest einem aus dem Puffertank und dem Speichertank verbindet.

6. Ölladevorrichtung nach Anspruch 5, wobei ein zweiter statischer Mischer zwischen dem Ejektor (56) und dem anderen Ende der Druckleitung angeordnet ist.

7. Ölladevorrichtung nach Anspruch 5, wobei das andere Ende der Eingangsleitung mit dem ersten statischen Mischer (26) verbunden ist.

8. Ölladevorrichtung nach Anspruch 1, wobei der erste statische Mischer Folgendes umfasst:
einen rohrförmigen Körper, der mit dem anderen Ende des Druckabfallrohrs (18) verbunden ist; und
eine Mischschnecke (24), die in einer Längsrichtung in dem rohrförmigen Körper angeordnet ist.

9. Ölladevorrichtung nach Anspruch 1, wobei die Öffnung (34) eine Innenseite des Druckabfallrohrs je nach Drehung öffnet und schließt.

10. Ölladevorrichtung nach Anspruch 1, wobei das Laderohr (16) und das Druckabfallmodul (19) ein Lademodul bilden, eine Mehrzahl von Lademodule vorhanden ist und das Druckabfallrohr von jedem der Lademodule mit einem ersten statischen Mischer verbunden ist.

11. Ölladevorrichtung nach Anspruch 1, wobei eine Mehrzahl von Speichertanks vorhanden ist und der Speichertank Folgendes umfasst:
ein Ölzufuhrrohr, das die Mehrzahl von Speichertanks verbindet, um das Öl an die Mehrzahl von Speichertanks zu verteilen; und
eine Umgehungsladeleitung (52), die in dem Laderohr verzweigt ist und mit dem Ölzufuhrrohr verbunden ist.

12. Ölladevorrichtung nach Anspruch 1, ferner umfassend:
ein Verbindungsrohr (50), das zwischen dem Laderohr und dem Druckabfallmodul angeordnet ist und welches das Laderohr mit dem Druckabfallrohr verbindet.

13. Öltransporter, umfassend:
einen Schiffskörper;
einen Speichertank, der im Inneren des Schiffkörpers ausgebildet ist und in den Öl, das aus einem Zuführrohr hineinströmt, geladen wird; und
eine Ölladevorrichtung nach einem der Ansprüche 1 bis 12.

## Revendications

1. Appareil de chargement de pétrole qui est raccordé à un tuyau d'alimentation et fournit du pétrole dans un réservoir de stockage, l'appareil de chargement de pétrole comprenant :
un tuyau de chargement (16) qui est raccordé au tuyau d'alimentation et est disposé dans une direction verticale à l'intérieur du réservoir de stockage ;
un module de chute de pression (19) qui comprend un tuyau de chute de pression (18), dont une extrémité est raccordée à une extrémité inférieure du tuyau de chargement, et un orifice à trous multiples (34) qui est ménagé dans une direction transversale à l'intérieur du tuyau de chute de pression (18) et induit une chute de pression du pétrole qui est déchargé du tuyau de chargement ; et
un premier mélangeur statique (26) qui est raccordé à l'autre extrémité du tuyau de chute de pression (18) et mélange le pétrole qui est déchargé du tuyau de chute de pression.

2. Appareil de chargement de pétrole selon la revendication 1, comprenant en outre :
un tuyau d'embranchement (32) en forme de T qui est intercalé entre le tuyau de chute de pression et le premier mélangeur statique et comprend un tuyau vertical, dont une extrémité est en communication avec l'autre extrémité du tuyau de chute de pression et dont l'autre extrémité est fermée, et un tuyau horizontal qui est en communication avec le tuyau vertical et qui est disposé séparément de l'autre extrémité du tuyau vertical d'une distance prédéterminée, tout en s'étendant dans la direction transversale depuis une paroi latérale du tuyau vertical et en se raccordant au premier mélangeur statique.

3. Appareil de chargement de pétrole selon la revendication 1, comprenant en outre :
un réservoir tampon (42) dans lequel s'écoule le pétrole qui est passé à travers le premier mélangeur statique.

4. Appareil de chargement de pétrole selon la revendication 3, dans lequel le réservoir tampon (42) comprend :
un tuyau de décharge (44) qui raccorde le premier mélangeur statique au réservoir tampon et est disposé sur l'extrémité inférieure du réservoir tampon ; et
un tuyau d'alimentation en pétrole (48) qui fournit le pétrole du réservoir tampon au réservoir de stockage,
dans lequel une sortie du tuyau de décharge n'est pas en regard d'une entrée du tuyau d'alimentation en pétrole.

5. Appareil de chargement de pétrole selon la revendication 3, comprenant en outre :
une conduite de pression (54) installée dans un côté externe du réservoir tampon, dont une extrémité est raccordée à un côté du réservoir tampon et dont l'autre extrémité est raccordée à l'autre extrémité du réservoir tampon ;
une pompe qui est disposée dans la conduite de pression et déplace le pétrole du réservoir tampon le long de la conduite de pression ;
un éducteur (56) qui est disposé dans la conduite de pression ; et
une conduite d'aspiration (58) qui raccorde l'éducteur à l'extrémité supérieure d'au moins l'un du réservoir tampon et du réservoir de stockage.

6. Appareil de chargement de pétrole selon la revendication 5, dans lequel un second mélangeur statique est intercalé entre l'éducteur (56) et l'autre extrémité de la conduite de pression.

7. Appareil de chargement de pétrole selon la revendication 5, dans lequel l'autre extrémité de la conduite d'entrée est raccordée au premier mélangeur statique (26).

8. Appareil de chargement de pétrole selon la revendication 1, dans lequel le premier mélangeur statique comprend :
un corps tubulaire qui est raccordé à l'autre extrémité du tuyau de chute de pression (18) et
une vis de mélange (24) qui est disposée dans une direction longitudinale dans le corps tubulaire.

9. Appareil de chargement de pétrole selon la revendication 1, dans lequel l'orifice (34) ouvre et ferme l'intérieur du tuyau de chute de pression en fonction de la rotation.

10. Appareil de chargement de pétrole selon la revendication 1, dans lequel le tuyau de chargement (16) et le module de chute de pression (19) forment un module de chargement, il y a une pluralité de modules de chargement et le tuyau de chute de pression de chacun des modules de chargement est raccordé à un premier mélangeur statique.

11. Appareil de chargement de pétrole selon la revendication 1, dans lequel il y a une pluralité de réservoirs de stockage et le réservoir de stockage comprend :
un tuyau d'alimentation en pétrole qui raccorde la pluralité de réservoirs de stockage pour distribuer le pétrole à la pluralité de réservoirs de stockage ; et
une conduite de chargement de dérivation (52) qui est embranchée dans le tuyau de chargement et est raccordée au tuyau d'alimentation en pétrole.

12. Appareil de chargement de pétrole selon la revendication 1, comprenant en outre :
un tuyau de raccordement (50) qui est intercalé entre le tuyau de chargement et le module de chute de pression et raccorde le tuyau de chargement au module de chute de pression.

13. Pétrolier comprenant :
une coque de bateau ;
un réservoir de stockage qui est préparé à l'intérieur de la coque de bateau et qui est chargé de pétrole qui s'y écoule depuis un tuyau d'alimentation ; et
un appareil de chargement de pétrole selon l'une quelconque des revendications 1 à 12.
